# EUROPEAN PATENT SPECIFICATION

(11) **EP 3 403 443 B1**
(45) Date of publication and mention of the grant of the patent: **13.05.2020**
(21) Application number: 17701968.4
(22) Date of filing: 12.01.2017
(51) Int. Cl.: H04W 48/02, H04W 88/02, H04W 88/08

(54) **NARROW-BAND INTERNET-OF-THINGS ACCESS CONTROL MECHANISMS AND METHODS**
SCHMALBAND INTERNET-OF-THINGS ZUGANGSKONTROLLMECHANISMEN UND VERFAHREN
MÉCHANISMES DE CONTRÔLE D'ACCÈS D'INTERNET-OF-THINGS À BANDE ÉTROITE ET PROCÉDÉS

(30) Priority: 12.01.2016 US 201662277866 P
(43) Date of publication of application: 21.11.2018
(73) Proprietor: Intel Corporation, Santa Clara, CA 95054 (US)
(72) Inventor: MARTINEZ TARRADELL, Marta, Hillsboro Oregon 97124 (US); CHOI, Hyung-Nam, 22117 Hamburg (DE); BURBIDGE, Richard, C., Shrivenham Oxfordshire SN6 8HR (GB); PALAT, Sudeep, K., Cheltenham Gloucestershire GL51 0GG (GB); LIM, Seau, S., Swindon Wiltshire SN1 4GU (GB)
(74) Representative: Barton, Russell Glen
(86) International application number: PCT/US2017/013258
(87) International publication number: WO 2017/123812

(56) References cited:
- INTEL CORPORATION: "Email discussion report on [91bis#46][NB-IOT] System information content", 3GPP DRAFT; R2-156351_NB-IOT_SIB-CONTENT__EMAIL-DISCUS SION-46, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 20 November 2015 (2015-11-20), XP051025112, Retrieved from the Internet: URL:http://www.3gpp.org/ftp/tsg_ran/WG2_RL 2/TSGR2_92/Docs/ [retrieved on 2015-11-20]
- ALCATEL-LUCENT ET AL: "Applicability of RRC for NB-IoT", 3GPP DRAFT; R2-154774-NB-IOT-RRC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmö, Sweden; 20151005 - 20151009 4 October 2015 (2015-10-04), XP051005254, Retrieved from the Internet: URL:http://www.3gpp.org/ftp/Meetings_3GPP_ SYNC/RAN2/Docs/ [retrieved on 2015-10-04]
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.0.0, 6 January 2016 (2016-01-06), pages 1-507, XP051047501, [retrieved on 2016-01-06]
- INTEL CORPORATION: "NB-IoT access control", 3GPP DRAFT; R2-160500__NB-IOT__ACCESS_CONTROL_DRAFT-CR -TS-36.331__INTEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Budapest, HU; 20160119 - 20160121 13 January 2016 (2016-01-13), XP051066485, Retrieved from the Internet: URL:http://www.3gpp.org/ftp/tsg_ran/WG2_RL 2/TSGR2_AHs/2016_01_LTE_NB_IoT/Docs/ [retrieved on 2016-01-13]
- INTEL CORPORATION: "Email discussion report on [NBAH#05][NBIOT/SI] System Information", 3GPP DRAFT; R2-161254_NB-IOT_SI_EMAIL-DICUSSION-5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 14 February 2016 (2016-02-14), XP051055196, Retrieved from the Internet: URL:http://www.3gpp.org/ftp/Meetings_3GPP_ SYNC/RAN2/Docs/ [retrieved on 2016-02-14]

## Description

### BACKGROUND

A variety of wireless cellular communication systems have been implemented or are being proposed, including a 3rd Generation Partnership Project (3GPP) Universal Mobile Telecommunications System (UMTS), a 3GPP Long-Term Evolution (LTE) system, a 3GPP LTE-Advanced (LTE-A) system, and a 5th Generation wireless / 5th Generation mobile networks (5G) system. Next-generation wireless cellular communication systems may provide support for massive numbers of user devices like NarrowBand Internet-of-Things (NB-IoT) devices, Cellular Internet-of-Things (CIoT) devices, or Machine-Type Communication (MTC) devices. Such devices may have very low device complexity, may be latency-tolerant, and may be designed for low throughput and very low power consumption.

In various LTE systems, access control (or access barring) may be employed to limit access of one or more User Equipment (UE) devices to a wireless cellular communication system. 3GPP Tdoc. R2-156351, "Email discussion report on [91bis#46][NB-IOT] System information content"; 3GPP TSG RAN WG2 Meeting #92, November 2015, summarizes the discussion on the NB-IOT system information content.

### SUMMARY

The invention is defined by the independent claims. Advantageous embodiments are subject to the dependent claims.

### BRIEF DESCRIPTION OF THE DRAWINGS

The embodiments of the disclosure will be understood more fully from the detailed description given below and from the accompanying drawings of various embodiments of the disclosure. However, while the drawings are to aid in explanation and understanding, they are only an aid, and should not be taken to limit the disclosure to the specific embodiments depicted therein.
**Fig. 1** illustrates procedures for enabling access control mechanisms for NarrowBand Internet-of-Things (NB-IoT), in accordance with some embodiments of the disclosure.
**Fig. 2A-2C** illustrate procedures for enabling access control mechanisms for NB-IoT, in accordance with some embodiments of the disclosure.
**Fig. 3** illustrates procedures for enabling access control mechanisms for NB-IoT, in accordance with some embodiments of the disclosure.
**Fig. 4** illustrates procedures as well as ASN messages and IEs for enabling access control mechanisms for NB-IoT, in accordance with some embodiments of the disclosure.
**Fig. 5** illustrates procedures, ASN messages and IEs, and field descriptions for enabling access control mechanisms for NB-IoT, in accordance with some embodiments of the disclosure.
**Fig. 6** illustrates procedures, ASN messages and IEs, and conditional definitions for enabling access control mechanisms for NB-IoT, in accordance with some embodiments of the disclosure.
**Fig. 7** illustrates an Evolved Node B (eNB) and a User Equipment (UE), in accordance with some embodiments of the disclosure.
**Fig. 8** illustrates hardware processing circuitries for an eNB for enabling access control mechanisms for NB-IoT, in accordance with some embodiments of the disclosure.
**Fig. 9** illustrates hardware processing circuitries for a UE for enabling access control mechanisms for NB-IoT, in accordance with some embodiments of the disclosure.
**Fig. 10** illustrates methods for an eNB for enabling access control mechanisms for NB-IoT, in accordance with some embodiments of the disclosure.
**Fig. 11** illustrates methods for a UE for enabling access control mechanisms for NB-IoT, in accordance with some embodiments of the disclosure.
**Fig. 12** illustrates example components of a UE device, in accordance with some embodiments of the disclosure.

### DETAILED DESCRIPTION

Various wireless cellular communications systems have been implemented or are being proposed, including a 3rd Generation Partnership Project (3GPP) Universal Mobile Telecommunications System (UMTS), a 3GPP Long-Term Evolution (LTE) system, a 3GPP LTE-Advanced system, and a 5th Generation wireless system / 5th Generation mobile networks (5G) system / 5th Generation new radio (NR) system. Next-generation wireless cellular communication systems may provide support for massive numbers of user devices like NarrowBand Internet-of-Things (NB-IoT) devices, Cellular Internet-of-Things (CIoT) devices, or Machine-Type Communication (MTC) devices.

NB-IoT may employ a clean-slate solution, based on legacy LTE but not necessarily backward compatible, in order to address specific Cellular Internet-of-Things requirements, such as improved indoor coverage, support for massive numbers of low-throughput devices, low delay sensitivity, ultra-low device cost, low device power consumption, and optimized network architecture.

Various Radio Access Network (RAN) changes may define Access Control (AC) mechanisms, or Access Barring (AB) mechanisms, for NB-IoT designs. (In this disclosure, the terms "access barring" and "access control" may be used substantially interchangeably.) One baseline for such RAN changes may be that only two levels of discrimination (e.g., normal and exceptional data) might be supported. Another baseline for such RAN changes may be a common barring bitmap defined for Mobile Originated (MO) signaling and MO data. Another baseline for such RAN changes may be a load-spreading mechanism.

Discussed herein are various mechanisms and methods for enabling access control mechanisms for NB-IoT. In some embodiments, a Master Information Block (MIB) for NB-IoT (MIB-NB) may carry an AC enable indicator, which may indicate whether AC is enabled for an eNB (e.g., for NB-IoT capability). In some embodiments, a broadcasted System Information Block (SIB) for AC, or SIB-AC, may carry various AC barring parameters. For some embodiments, a SIB-1 may carry a SIB-AC scheduling indicator, which may indicate a timing for transmission of an SIB-AC.

In some embodiments, AC parameters may change at predetermined times or boundaries, which may be related to a modification period (e.g., a Broadcast Control Channel (BCCH) modification period). For some embodiments, a SIB-1 may carry a system information value tag, which may indicate changes in AC parameters. In some embodiments, a SIB-AC may carry a barring bitmap, which may be for barring MO normal reporting (or MO normal data reporting). For some embodiments, a SIB-AC may carry an indicator for barring exceptional reporting, which may indicate that the barring bitmap is used for barring MO exceptional reporting (or MO exceptional data reporting).

In the following description, numerous details are discussed to provide a more thorough explanation of embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical, mechanical, or magnetic connection between the things that are connected, without any intermediary devices. The term "coupled" means either a direct electrical, mechanical, or magnetic connection between the things that are connected or an indirect connection through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about" generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking, or in any other manner.

It is to be understood that the terms so used are interchangeable under appropriate circumstances such that the embodiments of the invention described herein are, for example, capable of operation in other orientations than those illustrated or otherwise described herein.

The terms "left," "right," "front," "back," "top," "bottom," "over," "under," and the like in the description and in the claims, if any, are used for descriptive purposes and not necessarily for describing permanent relative positions.

For purposes of the embodiments, the transistors in various circuits, modules, and logic blocks are Tunneling FETs (TFETs). Some transistors of various embodiments may comprise metal oxide semiconductor (MOS) transistors, which include drain, source, gate, and bulk terminals. The transistors may also include Tri-Gate and FinFET transistors, Gate All Around Cylindrical Transistors, Square Wire, or Rectangular Ribbon Transistors or other devices implementing transistor functionality like carbon nanotubes or spintronic devices. MOSFET symmetrical source and drain terminals i.e., are identical terminals and are interchangeably used here. A TFET device, on the other hand, has asymmetric Source and Drain terminals. Those skilled in the art will appreciate that other transistors, for example, Bi-polar junction transistors-BJT PNP/NPN, BiCMOS, CMOS, etc., may be used for some transistors without departing from the scope of the disclosure.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

In addition, for purposes of the present disclosure, the term "eNB" may refer to a legacy LTE capable Evolved Node-B (eNB), a NarrowBand Internet-of-Things (NB-IoT) capable eNB, a Cellular Internet-of-Things (CIoT) capable eNB, a Machine-Type Communication (MTC) capable eNB, and/or another base station for a wireless communication system. For purposes of the present disclosure, the term "UE" may refer to a legacy LTE capable User Equipment (UE), an NB-IoT capable UE, a CloT capable UE, an MTC capable UE, and/or another mobile equipment for a wireless communication system.

Various embodiments of eNBs and/or UEs discussed below may process one or more transmissions of various types. Some processing of a transmission may comprise demodulating, decoding, detecting, parsing, and/or otherwise handling a transmission that has been received. In some embodiments, an eNB or UE processing a transmission may determine or recognize the transmission's type and/or a condition associated with the transmission. For some embodiments, an eNB or UE processing a transmission may act in accordance with the transmission's type, and/or may act conditionally based upon the transmission's type. An eNB or UE processing a transmission may also recognize one or more values or fields of data carried by the transmission. Processing a transmission may comprise moving the transmission through one or more layers of a protocol stack (which may be implemented in, e.g., hardware and/or software-configured elements), such as by moving a transmission that has been received by an eNB or a UE through one or more layers of a protocol stack.

Various embodiments of eNBs and/or UEs discussed below may also generate one or more transmissions of various types. Some generating of a transmission may comprise modulating, encoding, formatting, assembling, and/or otherwise handling a transmission that is to be transmitted. In some embodiments, an eNB or UE generating a transmission may establish the transmission's type and/or a condition associated with the transmission. For some embodiments, an eNB or UE generating a transmission may act in accordance with the transmission's type, and/or may act conditionally based upon the transmission's type. An eNB or UE generating a transmission may also determine one or more values or fields of data carried by the transmission. Generating a transmission may comprise moving the transmission through one or more layers of a protocol stack (which may be implemented in, e.g., hardware and/or software-configured elements), such as by moving a transmission to be sent by an eNB or a UE through one or more layers of a protocol stack.

In a legacy LTE system, a network might change one or more AC parameters as congestion occurs to prioritize the access of UEs that might be less delay-tolerant. However, in NB-IoT systems, UEs may be disposed to tolerating longer delays. Accordingly, changes to AC parameters in NB-IoT systems might not be made immediately. Instead, a network might merely change AC parameters in such a way as to enable UEs that may benefit from combining large numbers of repetitions of SIB-AC message to anticipate when the respective messages may be different. This may, in turn, advantageously permit the UEs to avoid attempting to combine messages that are different.

For example, a UE that may make use of merely a single copy of a SIB-AC bearing message or a low number of repetitions of a SIB-AC bearing message (e.g., due to its location in a shallow enhanced coverage level) might start decoding at any time. In contrast, a UE that may make use of a large number of repetitions (e.g., due to being located in a deep enhanced coverage level) may wait to start decoding at a subsequent boundary at which AC parameters may change.

Accordingly, the SIB-AC may change at known boundaries, to permit an NB-IoT capable UE that is disposed to decode large number of repetitions of the message carrying SIB-AC to start decoding (and combining) at a subsequent boundary, and to permit an NB-IoT capable UE that is disposed to decoding merely a single repetition of the message carrying SIB-AC, or a low number of repetitions, to start decoding at any time. In some embodiments, this predetermined boundary may be substantially similar to an NB-IoT BCCH modification boundary. In some embodiments, this predetermined boundary may be another time, such as a boundary at which another SIB (e.g., a SIB-1) may be expected to change.

In some embodiments, a UE may be disposed to knowing that SIB-AC has changed when the UE has a need to access the wireless network. In some embodiments, a UE may be disposed to knowing that SIB-AC has changed at any time it has changed. The UE may be disposed to knowing that SIB-AC has changed independently of whether System Information (SI) or paging are used, or not, to indicate changes to SIB-AC. As discussed herein, NB-IoT capable UEs may be designed for high tolerance of delays and reduced power consumption. As a result, in some embodiments, a UE may advantageously be informed that SIB-AC has changed when the UE tries to access the network, and an NB-IoT capable UE may get updated SIB-AC information when it needs to access the network (e.g., just before attempting to establish a connection).

In various embodiments, a UE may have advantageously receive a minimal indication that SIB-AC is broadcasted and/or has changed. In some embodiments, a scheduling indicator for an SIB-AC that is to be sent may be provided as part of a SIB-1. (In non-congested situations, a network might not send a SIB-AC.)

For various embodiments, a network may indicate to a UE that AC parameters have changed (e.g., that a SIB-AC has changed). In some embodiments, a system information value tag in a SIB-1 may indicate that AC parameters have changed. A UE may then be disposed to relatively frequently checking SIB-1 in order to determine whether or not an SIB-AC is scheduled (independently of any change in SIB-AC).

For some embodiments, a system information value tag in a MIB-NB may indicate that AC parameters have changed. A UE may then be disposed to check an SIB-1 to determine whether a SIB-AC scheduling indicator has changed or not before actually checking whether SIB-AC information has been updated, unless an SI system value tag per SI message as defined in enhanced MTC (eMTC) is also defined for NB-IoT. In such embodiments, an update of an SI modification indicator may be disposed to being sent through paging.

In some embodiments, an AC enable indicator in a MIB-NB may indicate that SIB-AC is broadcasted. A UE may thereby advantageously avoid reading a SIB-1 when SIB-AC is not sent. The UE may still be disposed to receiving SIB-1 in order to get a SI scheduling indicator related to broadcasted SIB-AC, but the UE may not know whether the information is the same as, or different than, information it has stored.

For some embodiments, an AC enable indicator in a MIB-NB may indicate that SIB-AC is broadcasted. When the AC enable indicator is enabled, a system information value tag may additionally indicate changes to an SIB-AC message, if SIB-AC is changed in substantially similar modification periods as other SIBs (e.g., in a BCCH modification period). For some embodiments, a value tag defined in SIB-1 may indicate changes of the SI message carrying SIB-AC (when broadcasted).

In some embodiments, if an AC enable indicator has a value indicating that AC is enabled, and if the SIB-AC is only changed at a modification time boundary (e.g., at a BCCH modification boundary), a system information value tag included in an MIB-NB may indicate changes of SIB-AC.

For some embodiments, a network may indicate changes to SIB-AC to a UE through a specific indication in a paging message, similar to legacy Extended Access Barring (EAB). In some embodiments, a network may not indicate changes to SIB-AC through a specific indication in a paging message, which may advantageously reduce signaling over paging, with the understanding that a UE may check SIB-AC before accessing the network, and those accesses may be relatively infrequent. Accordingly, in some embodiments, there might not be a specific flag in paging defined to indicate changes of SIB-AC.

In some embodiments, an AC barring time may not be disposed to being provided in an Access Stratum (AS) layer. Similar to a legacy EAB scenario, an upper layer (e.g., a Non Access Stratum (NAS) layer) may trigger future requests to access the network.

For some embodiments, an AC barring time may be disposed to being provided in an AS layer. In some embodiments, the AC barring time may be predetermined (e.g., defined by specification), which may advantageously reduce signaling. In some embodiments, the AC barring time may be configurable by a network, similar to a legacy Access Class Barring (ACB) scheme.

NB-IoT may employ a bitmap-based barring approach for AC barring, which may advantageously be deterministic and allow for barring and/or unbarring of different UEs separately. For legacy EAB, if EAB results in access to a cell being barred, an NAS may be informed about the failure to establish a Radio Resource Control (RRC) connection, and that EAB may be applicable. The AS layer may then rely on NAS to not initiate establishment of RRC connection frequently, which could be left up to UE implementation, for example. Moreover, additional AC barring time may advantageously not need to be defined in an AS layer if an EAB bitmap approach is used as an access barring mechanism for NB-IoT systems.

For some embodiments, an NAS layer may be disposed to considering whether an RRC connection should be established for "exceptional reporting" (e.g., high-priority reporting and/or alarm reporting) instead of "normal reporting." In some embodiments, an AS may indicate to an NAS whether or not exceptional reporting is barred. In some embodiments, an NAS may send an indication to an AS regarding whether a connection request may be subject to exceptional reporting. It may then be up to the AS to determine whether or not the access for exceptional reporting may be barred.

An AS layer may inform a NAS layer about a failure to establish an RRC connection due to access barring for an NB-IoT UE. The UE NAS may then be left to determine when a new request may be initiated.

Accordingly, in various embodiments, NB-IoT access control may define an MIB-NB and a SIB-AC. The MIB-NB may include an AC enable indicator, which may indicate whether or not access barring is enabled for NB-IoT. For example, a first value of the AC enable indicator (e.g., a "true" value, or "1") may indicate that access barring is enabled for NB-IoT, and a second value of the AC enable indicator (e.g., a "false" value, or "0") may indicate that access barring is not enabled for NB-IoT. The MIB-NB may also carry a system information value tag indicating changes in SIB-AC

The SIB-AC may carry access barring information as well as a new indication that MO exceptional reporting is barred. In some embodiments, if MO exceptional reporting is barred, MO exceptional reporting may use the same barring bitmap as MO normal reporting. For some embodiments, the SIB-AC may change in a modification period.

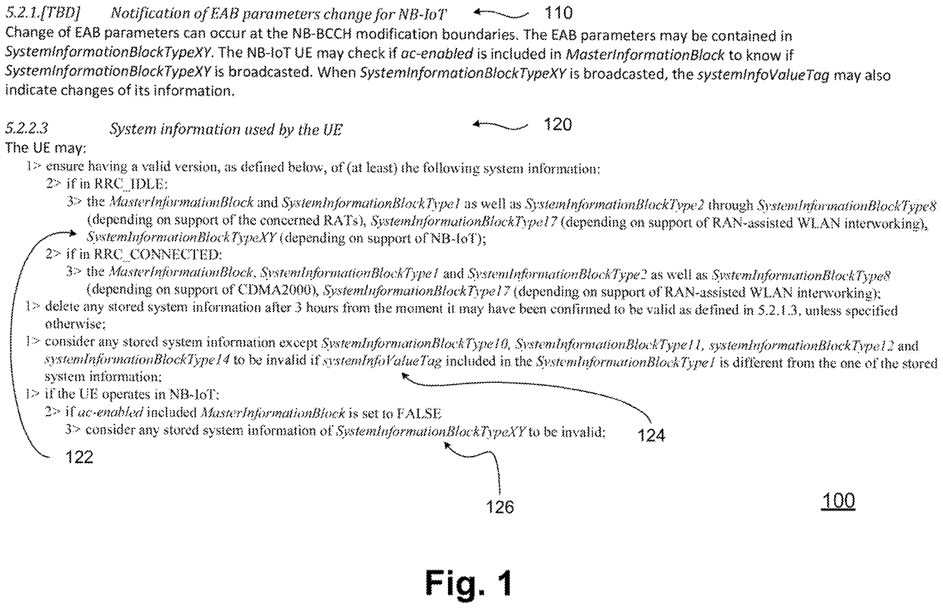

**Fig. 1** illustrates procedures for enabling access control mechanisms for NarrowBand Internet-of-Things (NB-IoT), in accordance with some embodiments of the disclosure. A procedure 100 may comprise a portion 110 and a portion 120.

Portion 110 may pertain to notifications regarding AC parameter (e.g., EAB parameter) changes for NB-IoT. In portion 110, AC parameters may change at a NarrowBand BCCH (NB-BCCH) modification boundary. The AC parameters may be contained in an SIB-AC (e.g., a SystemInformationBlockTypeXY). An NB-IoT UE may check whether an AC enable indicator (e.g., ac-enabled) is included in a MIB-NB (e.g., a MasterInformationBlock) in order to determine whether SIB-AC is broadcasted. When SIB-AC is broadcasted, a system information value tag (e.g., systemInfoValueTag) may also indicate a change of its information.

Portion 120 may pertain to system information required by a UE. In portion 120, at a first part 122, the UE may ensure that it has a valid version of various system information, which may include SIB-AC (depending upon support for NB-IoT). At a second part 124, the UE may consider stored SI to be invalid if a system information value tag included in a SIB-1 is different from a stored system information. At a third part 126, if the UE operates in NB-IoT, and if the AC enable indicator in a MIB-NB is set to indicate that AC is not enabled (e.g., a "false" value, or "0"), then the UE may consider any stored SI of SIB-AC to be invalid.

With respect to portion 110, regarding Notification of EAB parameters change for NB-IoT: Change of EAB parameters can occur at the NB-BCCH modification boundaries. The EAB parameters may be contained in SystemInformationBlockTypeXY. The NB-IoT UE may check if ac-enabled is included in MasterInformationBlock to know if SystemInformationBlockTypeXY is broadcasted. When SystemInformationBlockTypeXY is broadcasted, the systemInfoValueTag may also indicate changes of its information.

With respect to portion 120, regarding system information used by the UE: The UE may (referenced sections refer to 3GPP TS 36.331):
1> ensure having a valid version, as defined below, of (at least) the following system information:
   2> if in RRC_IDLE:
      3> the MasterInformationBlock and SystemInformationBlockType1 as well as SystemInformationBlockType2 through SystemInformationBlockType8 (depending on support of the concerned RATs), SystemInformationBlockType17 (depending on support of RAN-assisted WLAN interworking), SystemInformationBlockTypeXY (depending on support of NB-IoT);
   2> if in RRC_CONNECTED:
      3> the MasterInformationBlock, SystemInformationBlockType1 and SystemInformationBlockType2 as well as SystemInformationBlockType8 (depending on support of CDMA2000), SystemInformationBlockType17 (depending on support of RAN-assisted WLAN interworking);
1> delete any stored system information after 3 hours from the moment it may have been confirmed to be valid as defined in 5.2.1.3, unless specified otherwise;
1> consider any stored system information except SystemInformationBlockType10, SystemInformationBlockType11, systemInformationBlockType12 and systemInformationBlockType14 to be invalid if systemInfoValueTag included in the SystemInformationBlockType1 is different from the one of the stored system information;
1> if the UE operates in NB-IoT:
   2> if ac-enabled included MasterInformationBlock is set to FALSE
   3> consider any stored system information of SystemInformationBlockTypeXY to be invalid.

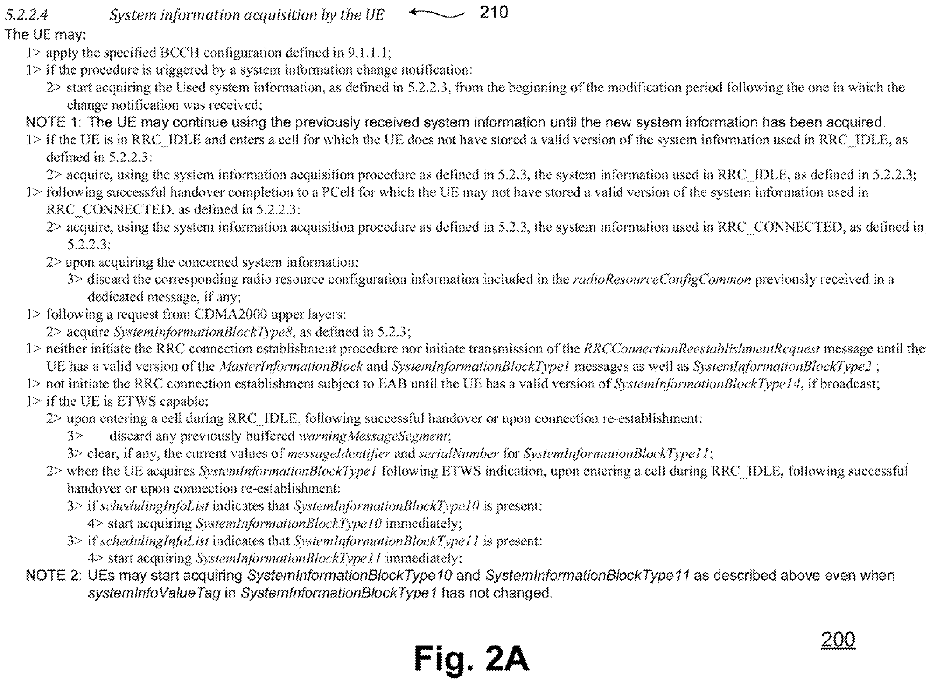

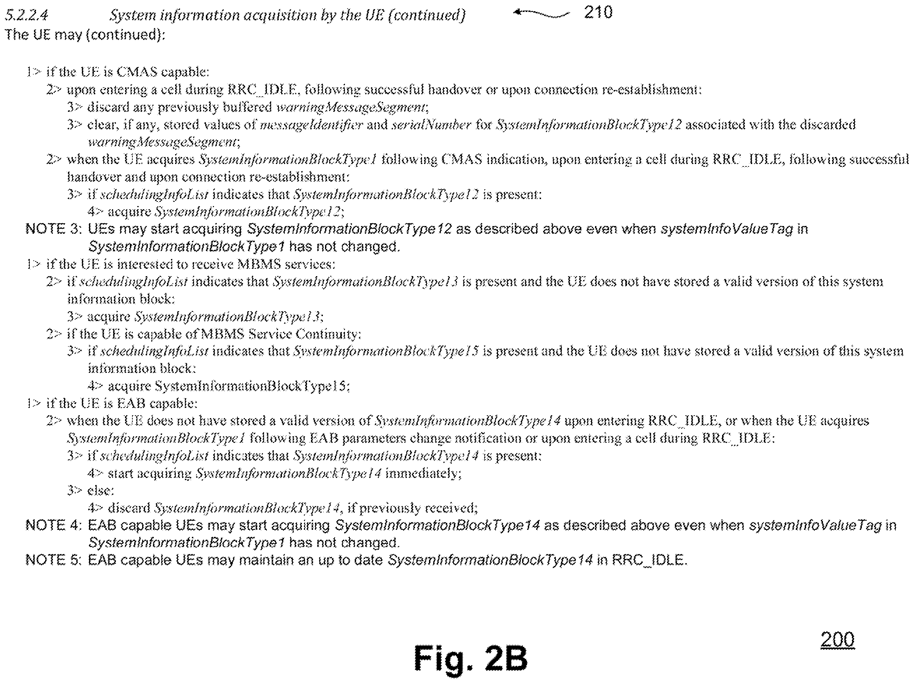

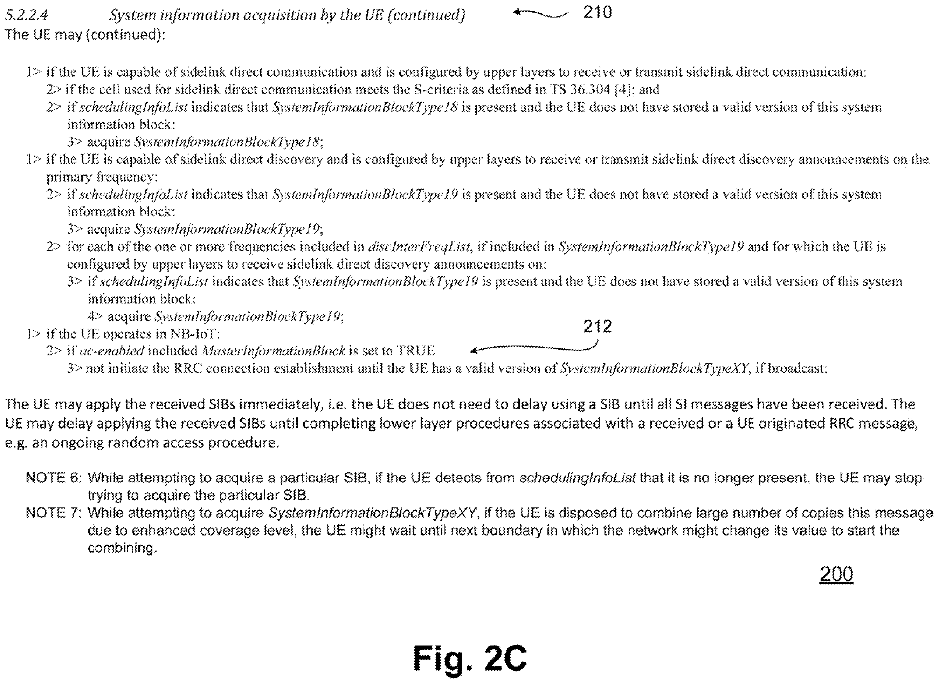

**Fig. 2A-2C** illustrate procedures for enabling access control mechanisms for NB-IoT, in accordance with some embodiments of the disclosure. A procedure 210 may comprise a portion 212.

Portion 210 may pertain to system information acquisition by a UE. In portion 210, at a first part 212, if the UE operates in NB-IoT, and if an AC enable indicator included in a MIB-NB is enabled (e.g., a "true" value, or "1"), then the UE might not initiate an RRC connection establishment until the UE has a valid version of SIB-AC, if broadcast.

With respect to portion 210, regarding system information acquisition by the UE: The UE may (referenced sections refer to 3GPP TS 36.331):
1> apply the specified BCCH configuration defined in 9.1.1.1;
1> if the procedure is triggered by a system information change notification:
   2> start acquiring the Used system information, as defined in 5.2.2.3, from the beginning of the modification period following the one in which the change notification was received;
   NOTE 1: The UE may continue using the previously received system information until the new system information has been acquired.
1> if the UE is in RRC_IDLE and enters a cell for which the UE does not have stored a valid version of the system information used in RRC_IDLE, as defined in 5.2.2.3:
   2> acquire, using the system information acquisition procedure as defined in 5.2.3, the system information used in RRC_IDLE, as defined in 5.2.2.3;
1> following successful handover completion to a PCell for which the UE may not have stored a valid version of the system information used in RRC_CONNECTED, as defined in 5.2.2.3:
   2> acquire, using the system information acquisition procedure as defined in 5.2.3, the system information used in RRC_CONNECTED, as defined in 5.2.2.3;
   2> upon acquiring the concerned system information:
      3> discard the corresponding radio resource configuration information included in the radioResourceConfigCommon previously received in a dedicated message, if any;
1> following a request from CDMA2000 upper layers:
   2> acquire SystemInformationBlockType8, as defined in 5.2.3;
1> neither initiate the RRC connection establishment procedure nor initiate transmission of the RRCConnectionReestablishmentRequest message until the UE has a valid version of the MasterlnformationBlock and SystemInformationBlockType1 messages as well as SystemInformationBlockType2 ;
1> not initiate the RRC connection establishment subject to EAB until the UE has a valid version of SystemInformationBlockType14, if broadcast;
1> if the UE is ETWS capable:
   2> upon entering a cell during RRC IDLE, following successful handover or upon connection re-establishment:
      3> discard any previously buffered warningMessageSegment;
      3> clear, if any, the current values of messageIdentifier and serialNumber for SystemInformationBlockType11;
   2> when the UE acquires SystemInformationBlockType1 following ETWS indication, upon entering a cell during RRC_IDLE, following successful handover or upon connection re-establishment:
      3> if schedulingInfoList indicates that SystemInformationBlockType10 is present:
         4> start acquiring SystemInformationBlockType10 immediately;
      3> if schedulingInfoList indicates that SystemInformationBlockType11 is present:
         4> start acquiring SystemInformationBlockType11 immediately;
         NOTE 2: UEs may start acquiring SystemInformationBlockType10 and SystemInformationBlockType11 as described above even when systemInfoValueTag in SystemInformationBlockType1 has not changed.
1> if the UE is CMAS capable:
   2> upon entering a cell during RRC_IDLE, following successful handover or upon connection re-establishment:
      3> discard any previously buffered warningMessageSegment;
      3> clear, if any, stored values of messageIdentifier and serialNumber for SystemInformationBlockType12 associated with the discarded warningMessageSegment;
   2> when the UE acquires SystemInformationBlockType1 following CMAS indication, upon entering a cell during RRC_IDLE, following successful handover and upon connection re-establishment:
      3> if schedulingInfoList indicates that SystemInformationBlockType12 is present:
      4> acquire SystemInformationBlockType12;
      NOTE 3: UEs may start acquiring SystemInformationBlockType12 as described above even when systemInfoValueTag in SystemInformationBlockType1 has not changed.
1> if the UE is interested to receive MBMS services:
   2> if schedulingInfoList indicates that SystemInformationBlockType13 is present and the UE does not have stored a valid version of this system information block:
      3> acquire SystemInformationBlockType13;
   2> if the UE is capable of MBMS Service Continuity:
      3> if schedulingInfoList indicates that SystemInformationBlockType15 is present and the UE does not have stored a valid version of this system information block:
      4> acquire SystemInformationBlockType15;
1> if the UE is EAB capable:
   2> when the UE does not have stored a valid version of SystemInformationBlockType14 upon entering RRC IDLE, or when the UE acquires SystemInformationBlockType1 following EAB parameters change notification or upon entering a cell during RRC_IDLE:
   3> if schedulingInfoList indicates that SystemInformationBlockType14 is present:
      4> start acquiring SystemInformationBlockType14 immediately;
   3> else:
      4> discard SystemInformationBlockType14, if previously received;
      NOTE 4: EAB capable UEs may start acquiring SystemInformationBlockType14 as described above even when systemInfoValueTag in SystemInformationBlockType1 has not changed.
      NOTE 5: EAB capable UEs may maintain an up to date SystemInformationBlockType14 in RRC_IDLE.
1> if the UE is capable of sidelink direct communication and is configured by upper layers to receive or transmit sidelink direct communication:
   2> if the cell used for sidelink direct communication meets the S-criteria as defined in TS 36.304 [4]; and
   2> if schedulingInfoList indicates that SystemInformationBlockType18 is present and the UE does not have stored a valid version of this system information block:
      3> acquire SystemInformationBlockType18;
1> if the UE is capable of sidelink direct discovery and is configured by upper layers to receive or transmit sidelink direct discovery announcements on the primary frequency:
   2> if schedulingInfoList indicates that SystemInformationBlockType19 is present and the UE does not have stored a valid version of this system information block:
      3> acquire SystemInformationBlockType19;
   2> for each of the one or more frequencies included in discInterFreqList, if included in SystemInformationBlockType19 and for which the UE is configured by upper layers to receive sidelink direct discovery announcements on:
      3> if schedulingInfoList indicates that SystemInformationBlockType19 is present and the UE does not have stored a valid version of this system information block:
      4> acquire SystemInformationBlockType19;
1> if the UE operates in NB-IoT:
   2> if ac-enabled included MasterInformationBlock is set to TRUE
   3> not initiate the RRC connection establishment until the UE has a valid version of SystemInformationBlockTypeXY, if broadcast;

The UE may apply the received SIBs immediately, i.e. the UE does not need to delay using a SIB until all SI messages have been received. The UE may delay applying the received SIBs until completing lower layer procedures associated with a received or a UE originated RRC message, e.g. an ongoing random access procedure.

NOTE 6: While attempting to acquire a particular SIB, if the UE detects from schedulingInfoList that it is no longer present, the UE may stop trying to acquire the particular SIB.

NOTE 7: While attempting to acquire SystemInformationBlockTypeXY, if the UE is disposed to combine large number of copies this message due to enhanced coverage level, the UE might wait until next boundary in which the network might change its value to start the combining.

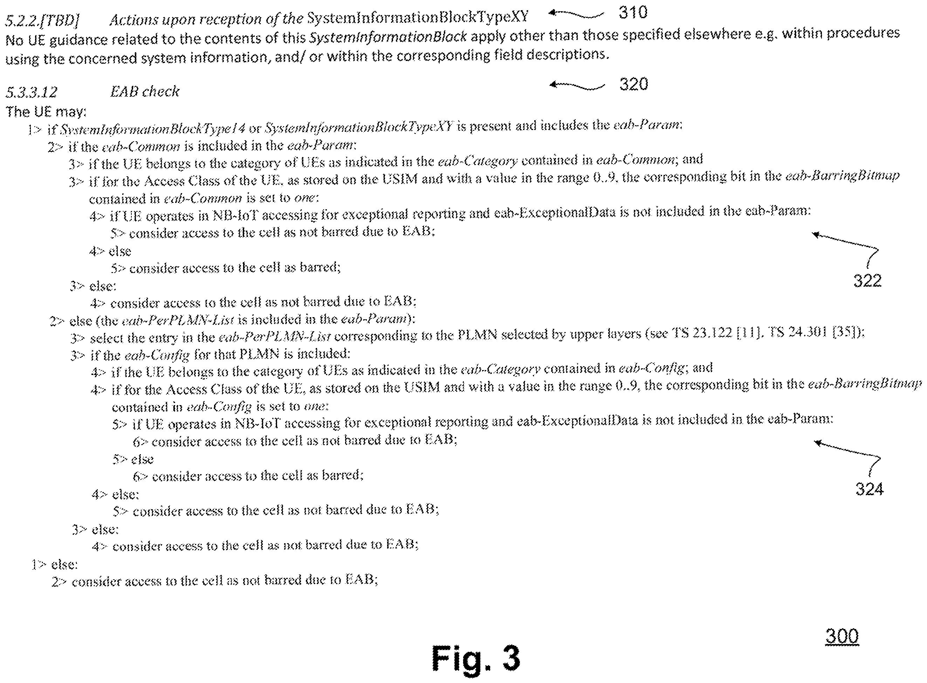

**Fig. 3** illustrates procedures for enabling access control mechanisms for NB-IoT, in accordance with some embodiments of the disclosure. A procedure 300 may comprise a portion 310 and a portion 320.

Portion 310 may pertain to actions upon receipt of a SIB-AC. In portion 310, UE requirements related to contents of a SIB-AC may not apply elsewhere (e.g., within procedures using the SI concerned, and/or within corresponding field descriptions).

Portion 320 may pertain to EAB checking. In portion 320, at a first part 322, if SIB-AC is present and includes AC barring parameters (e.g., eab-Param), and if the UE operates in NB-IoT accessing for exceptional reporting, but an indicator for barring MO exception reporting (e.g., eab-ExceptionalData) is not included in the AC barring parameters, access to the cell may be considered as being not barred due to EAB. In portion 320, at a second part 324, if SIB-AC is present and includes AC barring parameters, and if the UE operates in NB-IoT accessing for exceptional reporting, but an indicator for barring MO exception reporting exception reporting is not included in the AC barring parameters, access to the cell may be considered as being not barred due to EAB.

With respect to portion 310, regarding actions upon reception of the SystemInformationBlockTypeXY: No UE guidance related to the contents of this SystemInformationBlock apply other than those specified elsewhere e.g. within procedures using the concerned system information, and/ or within the corresponding field descriptions.

With respect to portion 320, regarding EAB checks: The UE may:
1> if SystemInformationBlockType14 or SystemInformationBlockTypeXY is present and includes the eab-Param:
   2> if the eab-Common is included in the eab-Param:
      3> if the UE belongs to the category of UEs as indicated in the eab-Category contained in eab-Common; and
      3> if for the Access Class of the UE, as stored on the USIM and with a value in the range 0..9, the corresponding bit in the eab-BarringBitmap contained in eab-Common is set to one:
         4> if UE operates in NB-IoT accessing for exceptional reporting and eab-ExceptionalData is not included in the eab-Param:
            5> consider access to the cell as not barred due to EAB;
         4> else
            5> consider access to the cell as barred;
      3> else:
         4> consider access to the cell as not barred due to EAB;
   2> else (the eab-PerPLMN-List is included in the eab-Param):
      3> select the entry in the eab-PerPLMN-List corresponding to the PLMN selected by upper layers (see TS 23.122 [11], TS 24.301 [35]);
      3> if the eab-Config for that PLMN is included:
         4> if the UE belongs to the category of UEs as indicated in the eab-Category contained in eab-Config; and
         4> if for the Access Class of the UE, as stored on the USIM and with a value in the range 0..9, the corresponding bit in the eab-BarringBitmap contained in eab-Config is set to one:
            5> if UE operates in NB-IoT accessing for exceptional reporting and eab-ExceptionalData is not included in the eab-Param:
               6> consider access to the cell as not barred due to EAB;
            5> else
               6> consider access to the cell as barred;
         4> else:
            5> consider access to the cell as not barred due to EAB;
      3> else:
         4> consider access to the cell as not barred due to EAB;
1> else:
   2> consider access to the cell as not barred due to EAB.

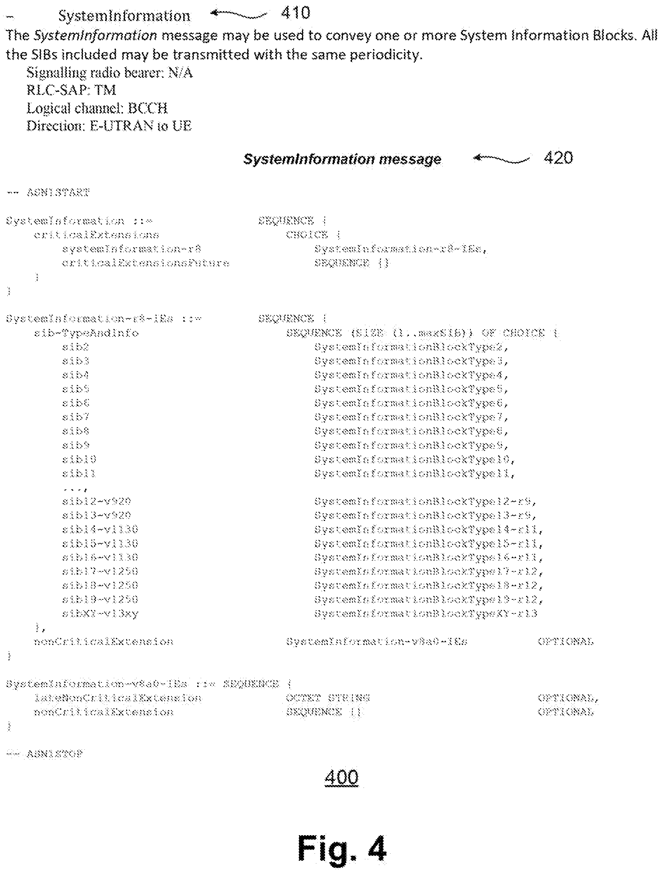

**Fig. 4** illustrates procedures as well as ASN messages and IEs for enabling access control mechanisms for NB-IoT, in accordance with some embodiments of the disclosure. A procedure 400 may comprise a portion 410 and a set of ASN elements 420.

Portion 410 may pertain to System Information (e.g., SI). With respect to portion 410, regarding SystemInformation: A SI message may be used to convey one or more SIBs, which may be transmitted with the same periodicity. Associated parameters may include:
Signalling radio bearer: N/A
RLC-SAP: TM
Logical channel: BCCH
Direction: E-UTRAN to UE

Set of ASN elements 420 may comprise a sequence of SI Information Elements (IEs), which may include a SIB-AC (e.g., SystemInformationBlockTypeXY-r13).

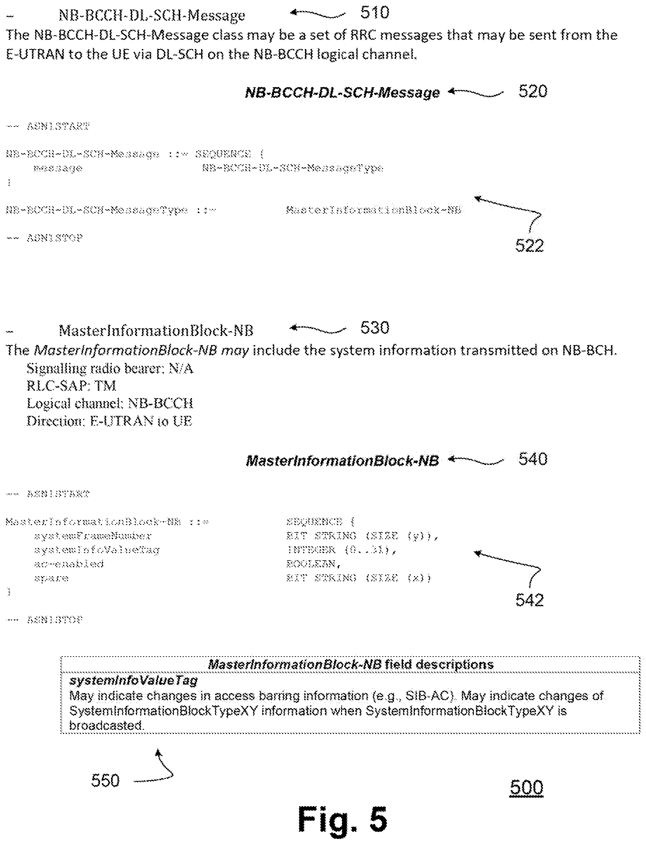

**Fig. 5** illustrates procedures, ASN messages and IEs, and field descriptions for enabling access control mechanisms for NB-IoT, in accordance with some embodiments of the disclosure. A procedure 500 may comprise a portion 510, a set of ASN elements 520, a portion 530, a set of ASN elements 540, and a set of field definitions 550.

Portion 510 may pertain to an NB BCCH Downlink (DL) scheduling message class (e.g., NB-BCCH-DL-SCH-Message). In some embodiments, the NB BCCH DL scheduling message class may be a set of RRC messages that may be sent from an Evolved UMTS Terrestrial Radio Access network (E-UTRAN) to a UE via a DL Shared Channel (DL-SCH) on an NB-BCCH logical channel.

Set of ASN elements 520 may comprise a part 522 pertaining to an NB BCCH DL scheduling message (e.g., NB-BCCH-DL-SCH-Message).

Portion 530 may pertain to an MIB-NB (e.g., MasterInformationBlock-NB). An MIB-NB may include system information transmitted on NB-BCCH. Associated parameters may include:
Signalling radio bearer: N/A
RLC-SAP: TM
Logical channel: NB-BCCH
Direction: E-UTRAN to UE

Set of ASN elements 540 may comprise a part 542 pertaining to a MIB-NB (e.g., Master-Information-Block-NB). MIB-NB may be a sequence comprising a system frame number (e.g., systemFrameNumber), a system information value tag (e.g., systemInfoValueTag), and an AC enable indicator (e.g., ac-enabled).

Set of field definitions 550 may comprise a description for a system information value tag. The system information value tag may indicate changes in access barring information (e.g., in SIB-AC). The system information value tag may also indicate changes of SIB-AC (e.g., SystemInformationgBlockTypeXY information) when SIB-AC is broadcasted.

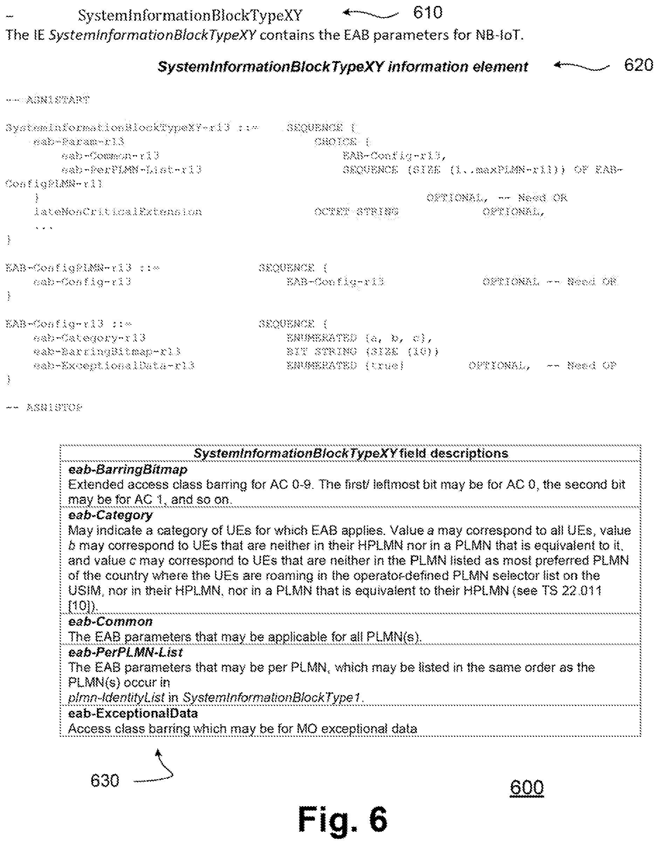

**Fig. 6** illustrates procedures, ASN messages and IEs, and field descriptions for enabling access control mechanisms for NB-IoT, in accordance with some embodiments of the disclosure. A procedure 600 may comprise a portion 610, a set of ASN elements 620, and a set of conditional definitions 630.

Portion 610 may pertain to a SIB-AC (e.g., SystemInformationBlockTypeXY). An SIB-AC IE may contain AC parameters (e.g, EAB parameters) for NB-IoT.

Set of ASN elements 620 may comprise a part pertaining to a SIB-AC (e.g., SystemInformationBlockTypeXY-r13), which may have a sequence of parameters including an EAB common parameters indicator (e.g., eab-Common) and an EAB Per Public Land Mobile Network (PLMN) list indicator (e.g., eab-PerPLMN-List). The EAB common parameters indicator may indicate EAB parameters applicable for all PLMNs. The EAB PLMN list indicator may indicate EAB parameters that may be per PLMN

Set of ASN elements 620 may also comprise a part pertaining to various AC parameters (e.g., EAB-Config-r13), which may have a sequence of parameters including an EAB category indicator (e.g., eab-Category), an EAB barring bitmap (e.g., eab-BarringBitmap), and/or an indicator for barring MO exceptional reporting (e.g., eab-ExceptionalData). The EAB category indicator may indicate a category of UEs for which EAB (e.g., AC) applies. A first value of the EAB category indicator may correspond to all UEs. A second value of the EAB category indicator may correspond to UEs that are neither in their Home PLMN (HPLMN), nor in a PLMN that is equivalent to it. A third value of the EAB category indicator may correspond to UEs that are neither in the PLMN listed as a most preferred PLMN of the country where the UEs are roaming in an operator-defined PLMN selector list, nor in their HPLMN, nor in a PLMN that is equivalent to their HPLMN

The EAB barring bitmap may indicate extended access class barring for AC 0 through 9. A first or leftmost bit may be for AC 0, a second bit may be for AC 1, and so on. The indicator for barring MO exceptional reporting may indicate AC barring which may be for MO exceptional data.

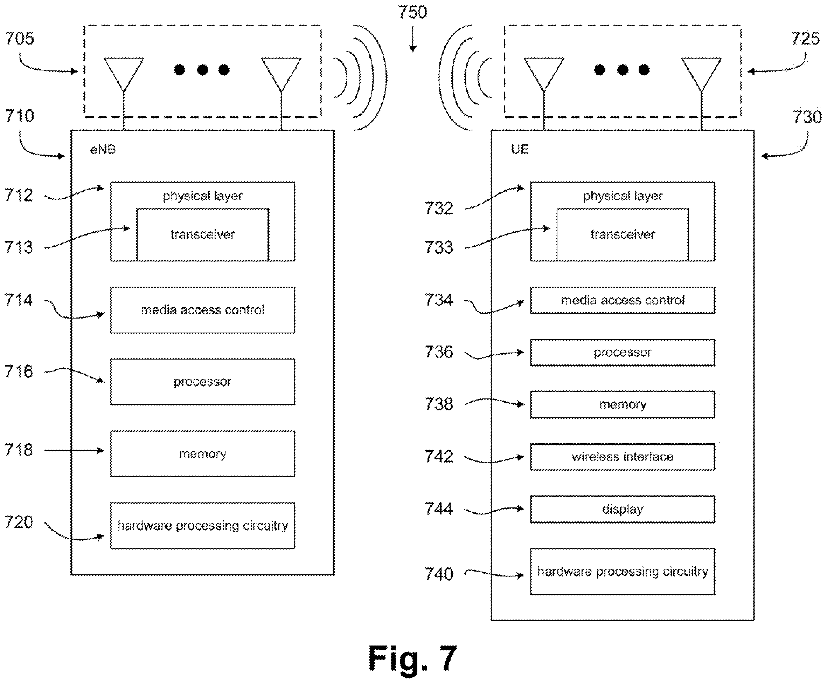

**Fig. 7** illustrates an eNB and a UE, in accordance with some embodiments of the disclosure. **Fig. 7** includes block diagrams of an eNB 710 and a UE 730 which are operable to co-exist with each other and other elements of an LTE network. High-level, simplified architectures of eNB 710 and UE 730 are described so as not to obscure the embodiments. It should be noted that in some embodiments, eNB 710 may be a stationary non-mobile device.

eNB 710 is coupled to one or more antennas 705, and UE 730 is similarly coupled to one or more antennas 725. However, in some embodiments, eNB 710 may incorporate or comprise antennas 705, and UE 730 in various embodiments may incorporate or comprise antennas 725.

In some embodiments, antennas 705 and/or antennas 725 may comprise one or more directional or omni-directional antennas, including monopole antennas, dipole antennas, loop antennas, patch antennas, microstrip antennas, coplanar wave antennas, or other types of antennas suitable for transmission of RF signals. In some MIMO (multiple-input and multiple output) embodiments, antennas 705 are separated to take advantage of spatial diversity.

eNB 710 and UE 730 are operable to communicate with each other on a network, such as a wireless network. eNB 710 and UE 730 may be in communication with each other over a wireless communication channel 750, which has both a downlink path from eNB 710 to UE 730 and an uplink path from UE 730 to eNB 710.

As illustrated in **Fig. 7**, in some embodiments, eNB 710 may include a physical layer circuitry 712, a MAC (media access control) circuitry 714, a processor 716, a memory 718, and a hardware processing circuitry 720. A person skilled in the art will appreciate that other components not shown may be used in addition to the components shown to form a complete eNB.

In some embodiments, physical layer circuitry 712 includes a transceiver 713 for providing signals to and from UE 730. Transceiver 713 provides signals to and from UEs or other devices using one or more antennas 705. In some embodiments, MAC circuitry 714 controls access to the wireless medium. Memory 718 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Hardware processing circuitry 720 may comprise logic devices or circuitry to perform various operations. In some embodiments, processor 716 and memory 718 are arranged to perform the operations of hardware processing circuitry 720, such as operations described herein with reference to logic devices and circuitry within eNB 710 and/or hardware processing circuitry 720.

Accordingly, in some embodiments, eNB 710 may be a device comprising an application processor, a memory, one or more antenna ports, and an interface for allowing the application processor to communicate with another device.

As is also illustrated in Fig. 7, in some embodiments, UE 730 may include a physical layer circuitry 732, a MAC circuitry 734, a processor 736, a memory 738, a hardware processing circuitry 740, a wireless interface 742, and a display 744. A person skilled in the art would appreciate that other components not shown may be used in addition to the components shown to form a complete UE.

In some embodiments, physical layer circuitry 732 includes a transceiver 733 for providing signals to and from eNB 710 (as well as other eNBs). Transceiver 733 provides signals to and from eNBs or other devices using one or more antennas 725. In some embodiments, MAC circuitry 734 controls access to the wireless medium. Memory 738 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Wireless interface 742 may be arranged to allow the processor to communicate with another device. Display 744 may provide a visual and/or tactile display for a user to interact with UE 730, such as a touch-screen display. Hardware processing circuitry 740 may comprise logic devices or circuitry to perform various operations. In some embodiments, processor 736 and memory 738 may be arranged to perform the operations of hardware processing circuitry 740, such as operations described herein with reference to logic devices and circuitry within UE 730 and/or hardware processing circuitry 740.

Accordingly, in some embodiments, UE 730 may be a device comprising an application processor, a memory, one or more antennas, a wireless interface for allowing the application processor to communicate with another device, and a touch-screen display.

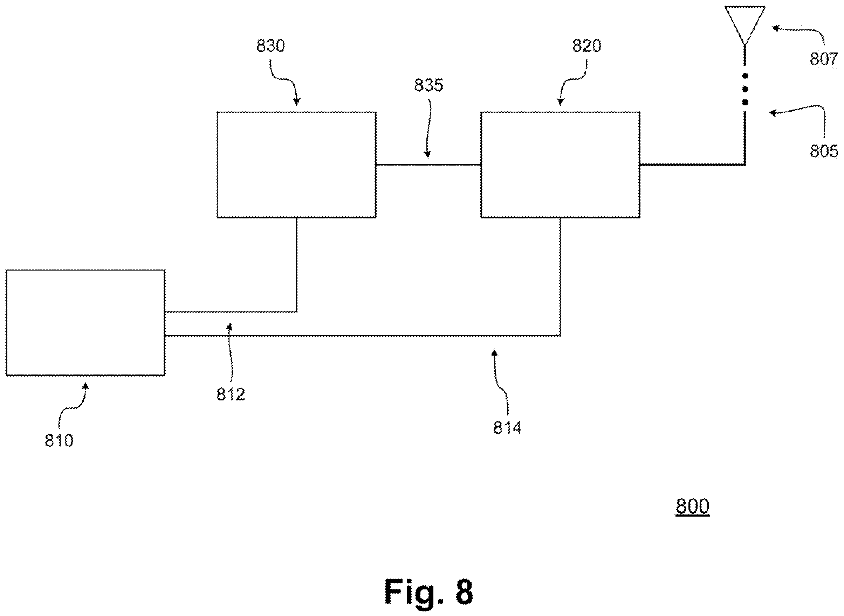

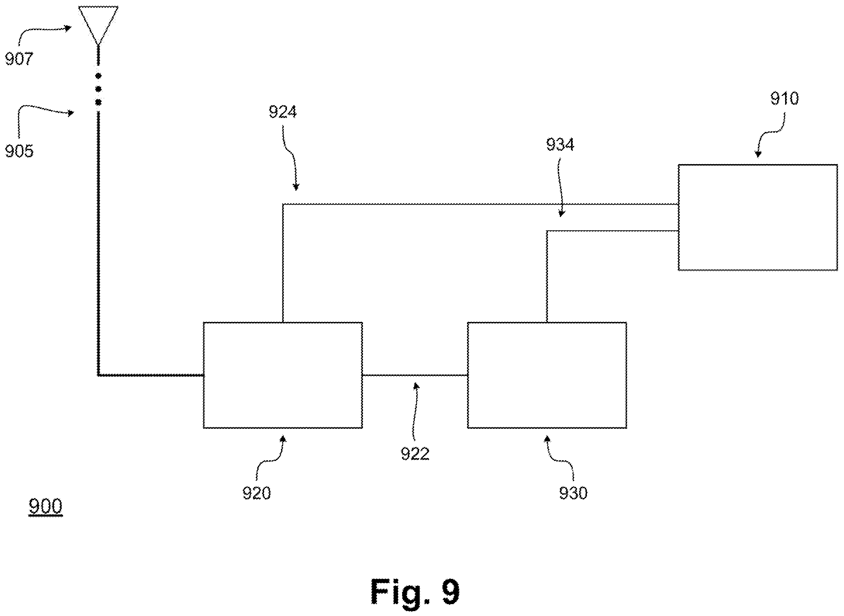

Elements of **Fig. 7**, and elements of other figures having the same names or reference numbers, can operate or function in the manner described herein with respect to any such figures (although the operation and function of such elements is not limited to such descriptions). For example, **Figs. 8** **and** **9** also depict embodiments of eNBs, hardware processing circuitry of eNBs, UEs, and/or hardware processing circuitry of UEs, and the embodiments described with respect to **Fig. 7** and **Figs. 8** **and** **9** can operate or function in the manner described herein with respect to any of the figures.

In addition, although eNB 710 and UE 730 are each described as having several separate functional elements, one or more of the functional elements may be combined and may be implemented by combinations of software-configured elements and/or other hardware elements. In some embodiments of this disclosure, the functional elements can refer to one or more processes operating on one or more processing elements. Examples of software and/or hardware configured elements include Digital Signal Processors (DSPs), one or more microprocessors, DSPs, Field-Programmable Gate Arrays (FPGAs), Application Specific Integrated Circuits (ASICs), Radio-Frequency Integrated Circuits (RFICs), and so on.

**Fig. 8** illustrates hardware processing circuitries for an eNB for enabling access control mechanisms for NB-IoT, in accordance with some embodiments of the disclosure. With reference to **Fig. 7**, an eNB may include various hardware processing circuitries discussed below (such as hardware processing circuitry 800 of **Fig. 8**), which may in turn comprise logic devices and/or circuitry operable to perform various operations. For example, in **Fig. 7**, eNB 710 (or various elements or components therein, such as hardware processing circuitry 720, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 716 (and/or one or more other processors which eNB 710 may comprise), memory 718, and/or other elements or components of eNB 710 (which may include hardware processing circuitry 720) may be arranged to perform the operations of these hardware processing circuitries, such as operations described herein with reference to devices and circuitry within these hardware processing circuitries. In some embodiments, processor 716 (and/or one or more other processors which eNB 710 may comprise) may be a baseband processor.

Returning to **Fig. 8****,** an apparatus of eNB 710 (or another eNB or base station), which may be operable to communicate with one or more UEs on a wireless network, may comprise hardware processing circuitry 800. In some embodiments, hardware processing circuitry 800 may comprise one or more antenna ports 805 operable to provide various transmissions over a wireless communication channel (such as wireless communication channel 750). Antenna ports 805 may be coupled to one or more antennas 807 (which may be antennas 705). In some embodiments, hardware processing circuitry 800 may incorporate antennas 807, while in other embodiments, hardware processing circuitry 800 may merely be coupled to antennas 807.

Antenna ports 805 and antennas 807 may be operable to provide signals from an eNB to a wireless communications channel and/or a UE, and may be operable to provide signals from a UE and/or a wireless communications channel to an eNB. For example, antenna ports 805 and antennas 807 may be operable to provide transmissions from eNB 710 to wireless communication channel 750 (and from there to UE 730, or to another UE). Similarly, antennas 807 and antenna ports 805 may be operable to provide transmissions from a wireless communication channel 750 (and beyond that, from UE 730, or another UE) to eNB 710.

Hardware processing circuitry 800 may comprise various circuitries operable in accordance with the various embodiments discussed herein. With reference to Fig. 8, hardware processing circuitry 800 may comprise a first circuitry 810, a second circuitry 820, and/or a third circuitry 830. First circuitry 810 may be operable to store an NB-IoT access barring enable indicator and a SIB-AC scheduling indicator. Second circuitry 820 may be operable to generate a MIB-NB message carrying the NB-IoT access barring enable indicator. First circuitry 810 may provide the NB-IoT access barring enable indicator to second circuitry 820 vi an interface 812. Third circuitry 830 may be operable to format a SIB-1 message to carry the SIB-AC scheduling indicator when the NB-IoT access barring enable indicator has a predetermined value. First circuitry may provide the SIB-AC scheduling indicator to second circuitry 820 via an interface 814. Third circuitry 830 may provide the SIB-1 message to second circuitry 820 via an interface 835.

In some embodiments, second circuitry 820 may be operable to generate a SIB-AC message carrying a set of SIB-AC information at a time indicated by the SIB-AC scheduling indicator. For some embodiments, first circuitry 810 may be operable to maintain the set of SIB-AC information outside of an NB-IoT modification period. The NB-IoT modification boundary period may be a BCCH modification period. In some embodiments, third circuitry 830 may be operable to format the MIB-NB message to carry an SI Value Tag. The SI Value Tag may indicate a change in the set of SIB-AC information.

For some embodiments, the set of SIB-AC information may include an indicator bitmap for barring MO normal reporting. In some embodiments, the set of SIB-AC information may include an indicator for barring MO exception reporting using the indicator bitmap for barring MO normal reporting.

In various embodiments, the eNB may be an NB-IoT capable eNB and/or an MTC capable eNB.

In some embodiments, first circuitry 810, second circuitry 820, and/or third circuitry 830 may be implemented as separate circuitries. In other embodiments, first circuitry 810, second circuitry 820, and/or third circuitry 830 may be combined and implemented together in a circuitry without altering the essence of the embodiments.

**Fig. 9** illustrates hardware processing circuitries for a UE for enabling access control mechanisms for NB-IoT, in accordance with some embodiments of the disclosure. With reference to **Fig. 7**, a UE may include various hardware processing circuitries discussed below (such as hardware processing circuitry 900 of **Fig. 9**), which may in turn comprise logic devices and/or circuitry operable to perform various operations. For example, in **Fig. 7**, UE 730 (or various elements or components therein, such as hardware processing circuitry 740, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 736 (and/or one or more other processors which UE 730 may comprise), memory 738, and/or other elements or components of UE 730 (which may include hardware processing circuitry 740) may be arranged to perform the operations of these hardware processing circuitries, such as operations described herein with reference to devices and circuitry within these hardware processing circuitries. In some embodiments, processor 736 (and/or one or more other processors which UE 730 may comprise) may be a baseband processor.

Returning to **Fig. 9****,** an apparatus of UE 730 (or another UE or mobile handset), which may be operable to communicate with one or more eNBs on a wireless network, may comprise hardware processing circuitry 900. In some embodiments, hardware processing circuitry 900 may comprise one or more antenna ports 905 operable to provide various transmissions over a wireless communication channel (such as wireless communication channel 750). Antenna ports 905 may be coupled to one or more antennas 907 (which may be antennas 725). In some embodiments, hardware processing circuitry 900 may incorporate antennas 907, while in other embodiments, hardware processing circuitry 900 may merely be coupled to antennas 907.

Antenna ports 905 and antennas 907 may be operable to provide signals from a UE to a wireless communications channel and/or an eNB, and may be operable to provide signals from an eNB and/or a wireless communications channel to a UE. For example, antenna ports 905 and antennas 907 may be operable to provide transmissions from UE 730 to wireless communication channel 750 (and from there to eNB 710, or to another eNB). Similarly, antennas 907 and antenna ports 905 may be operable to provide transmissions from a wireless communication channel 750 (and beyond that, from eNB 710, or another eNB) to UE 730.

Hardware processing circuitry 900 may comprise various circuitries operable in accordance with the various embodiments discussed herein. With reference to **Fig. 9**, hardware processing circuitry 900 may comprise a first circuitry 910, a second circuitry 920, and/or a third circuitry 930. First circuitry 910 may be operable to store an NB-IoT access barring enable indicator and a SIB-AC scheduling indicator. Second circuitry 920 may be operable to process a MIB-NB message carrying the NB-IoT access barring enable indicator. Second circuitry 920 may be operable to provide the NB-IoT access barring enable indicator to first circuitry 910 via an interface 924. Second circuitry 920 may be operable to provide a SIB-1 message to third circuitry 930 via an interface 922. Third circuitry 930 may be operable to decode from a SIB-1 message the SIB-AC scheduling indicator when the NB-IoT access barring enable indicator has a predetermined value. Third circuitry 930 may be operable to provide the SIB-AC scheduling indicator to first circuitry 910 via an interface 934.

In some embodiments, second circuitry 920 may be operable to process a SIB-AC message carrying a set of SIB-AC information at a time indicated by the SIB-AC scheduling indicator. For some embodiments, third circuitry 930 may be operable to decode from the MIB-NB message a SI Value Tag. The SI Value Tag may indicate a change in the set of SIB-AC information.

In various embodiments, the UE may be an NB-IoT capable UE and/or an MTC capable eNB.

In some embodiments, first circuitry 910, second circuitry 920, and/or third circuitry 930 may be implemented as separate circuitries. In other embodiments, first circuitry 910, second circuitry 920, and third circuitry 930 may be combined and implemented together in a circuitry without altering the essence of the embodiments.

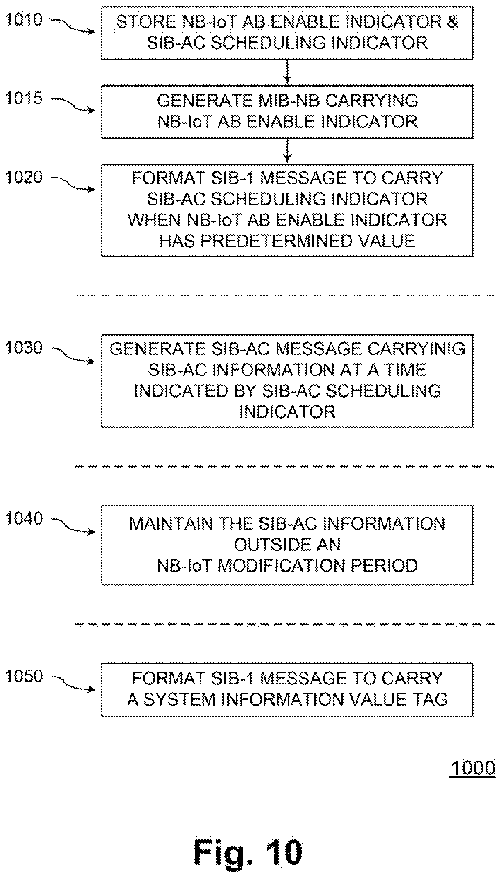

**Fig. 10** illustrates methods for an eNB for enabling access control mechanisms for NB-IoT, in accordance with some embodiments of the disclosure. With reference to **Fig.** 7, various methods that may relate to eNB 710 and hardware processing circuitry 720 are discussed below. Although the actions in method 1000 of **Fig. 10** are shown in a particular order, the order of the actions can be modified. Thus, the illustrated embodiments can be performed in a different order, and some actions may be performed in parallel. Some of the actions and/or operations listed in **Fig. 10** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause eNB 710 and/or hardware processing circuitry 720 to perform an operation comprising the methods of **Fig. 10**. Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods of **Fig. 10**.

Returning to **Fig. 10****,** various methods may be in accordance with the various embodiments discussed herein. A method 1000 may comprise a storing 1010, a generating 1015, and a formatting 1020. Method 1000 may also comprise a generating 1030, a maintaining 1040, and/or a formatting 1050.

In storing 1010, an NB-IoT access barring enable indicator and a SIB-AC scheduling indicator may be stored (e.g., in a memory). In generating 1015, a MIB-NB message carrying the NB-IoT access barring enable indicator may be generated. In formatting 1120, a SIB-1 message may be formatted to carry the SIB-AC scheduling indicator when the NB-IoT access barring enable indicator has a predetermined value.

In generating 1030, a SIB-AC message carrying a set of SIB-AC information may be generated at a time indicated by the SIB-AC scheduling indicator. In maintaining 1040, the set of SIB-AC information may be maintained outside of an NB-IoT modification period (e.g., by being stored in a memory). In some embodiments, the NB-IoT modification boundary period may be a BCCH modification period.

In formatting 1050, the MIB-NB message may be formatted to carry a SI Value Tag. The SI Value Tag may indicate a change in the set of SIB-AC information.

In some embodiments, the set of SIB-AC information may include an indicator bitmap for barring MO normal reporting. For some embodiments the set of SIB-AC information may include an indicator for barring MO exception reporting using the indicator bitmap for barring MO normal reporting.

In various embodiments, the eNB may an NB-IoT capable eNB and/or an MTC capable eNB.

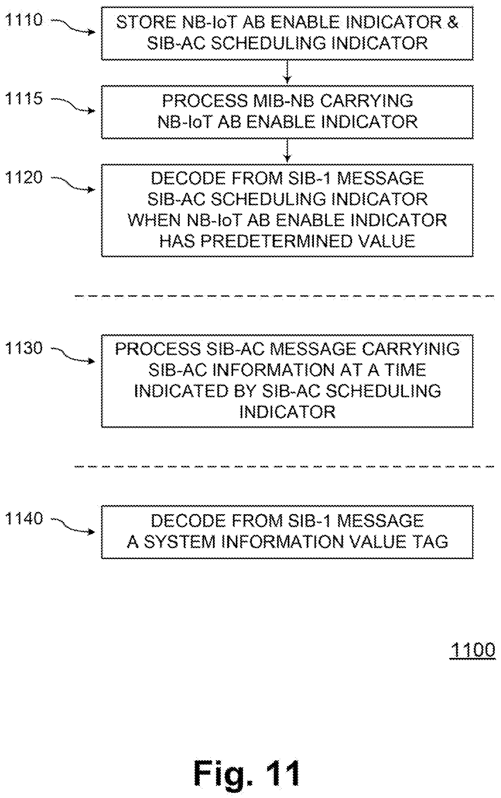

**Fig. 11** illustrates methods for a UE for enabling access control mechanisms for NB-IoT, in accordance with some embodiments of the disclosure. With reference to **Fig. 7**, methods that may relate to UE 730 and hardware processing circuitry 740 are discussed below. Although the actions in the method 1100 of **Fig. 11** are shown in a particular order, the order of the actions can be modified. Thus, the illustrated embodiments can be performed in a different order, and some actions may be performed in parallel. Some of the actions and/or operations listed in **Fig. 11** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause UE 730 and/or hardware processing circuitry 740 to perform an operation comprising the methods of **Fig. 11**. Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods of **Fig. 11****.**

Returning to **Fig. 11****,** various methods may be in accordance with the various embodiments discussed herein. A method 1100 may comprise a storing 1110, a processing 1115, and a decoding 1120. Method 1100 may also comprise a processing 1130 and/or a decoding 1140.

In storing 1110, an NB-IoT access barring enable indicator and a SIB-AC scheduling indicator may be stored (e.g., in a memory). In processing 1115, a MIB-NB message carrying the NB-IoT access barring enable indicator may be processed. In decoding 1120, a SIB-AC scheduling indicator may be decoded from a SIB-1 message when the NB-IoT access barring enable indicator has a predetermined value.

In processing 1130, a SIB-AC message carrying a set of SIB-AC information may be processed at a time indicated by the SIB-AC scheduling indicator. In decoding 1140, an SI Value Tag may be decoded from the MIB-NB message. The SI Value Tag may indicate a change in the set of SIB-AC information.

In various embodiments, the UE may be an NB-IoT capable UE and/or an MTC capable eNB.

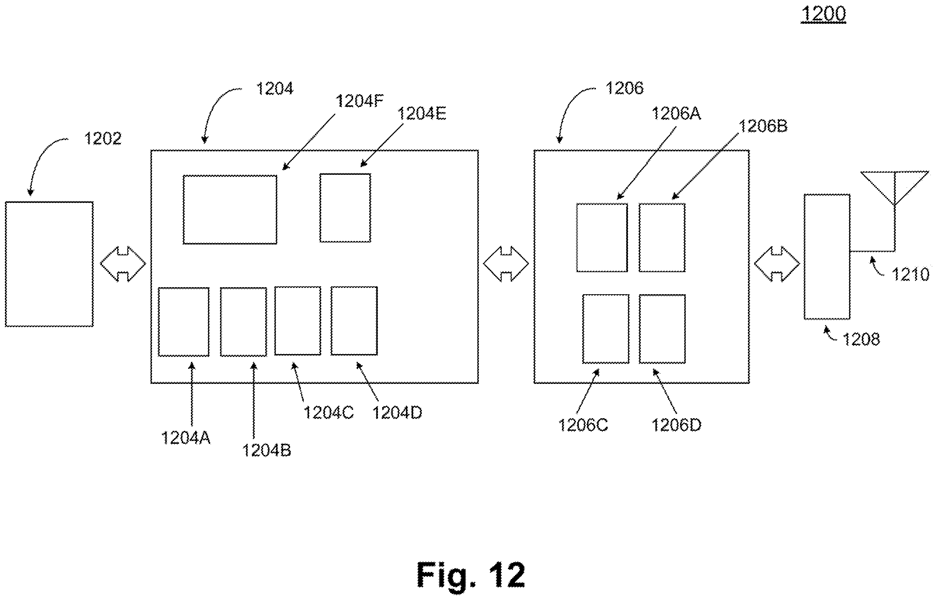

**Fig. 12** illustrates example components of a UE device, in accordance with some embodiments of the disclosure. In some embodiments, a UE device 1200 may include application circuitry 1202, baseband circuitry 1204, Radio Frequency (RF) circuitry 1206, front-end module (FEM) circuitry 1208, a low-power wake-up receiver (LP-WUR), and one or more antennas 1210, coupled together at least as shown. In some embodiments, the UE device 1200 may include additional elements such as, for example, memory/storage, display, camera, sensor, and/or input/output (I/O) interface.

The application circuitry 1202 may include one or more application processors. For example, the application circuitry 1202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 1204 may include circuitry such as, but not limited to, one or more single-core or multi-core processors. The baseband circuitry 1204 may include one or more baseband processors and/or control logic to process baseband signals received from a receive signal path of the RF circuitry 1206 and to generate baseband signals for a transmit signal path of the RF circuitry 1206. Baseband processing circuity 1204 may interface with the application circuitry 1202 for generation and processing of the baseband signals and for controlling operations of the RF circuitry 1206. For example, in some embodiments, the baseband circuitry 1204 may include a second generation (2G) baseband processor 1204A, third generation (3G) baseband processor 1204B, fourth generation (4G) baseband processor 1204C, and/or other baseband processor(s) 1204D for other existing generations, generations in development or to be developed in the future (e.g., fifth generation (5G), 6G, etc.). The baseband circuitry 1204 (e.g., one or more of baseband processors 1204A-D) may handle various radio control functions that enable communication with one or more radio networks via the RF circuitry 1206. The radio control functions may include, but are not limited to, signal modulation/demodulation, encoding/decoding, radio frequency shifting, etc. In some embodiments, modulation/demodulation circuitry of the baseband circuitry 1204 may include Fast-Fourier Transform (FFT), precoding, and/or constellation mapping/demapping functionality. In some embodiments, encoding/decoding circuitry of the baseband circuitry 1204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1204 may include elements of a protocol stack such as, for example, elements of an EUTRAN protocol including, for example, physical (PHY), media access control (MAC), radio link control (RLC), packet data convergence protocol (PDCP), and/or RRC elements. A central processing unit (CPU) 1204E of the baseband circuitry 1204 may be configured to run elements of the protocol stack for signaling of the PHY, MAC, RLC, PDCP and/or RRC layers. In some embodiments, the baseband circuitry may include one or more audio digital signal processor(s) (DSP) 1204F. The audio DSP(s) 1204F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1204 and the application circuitry 1202 may be implemented together such as, for example, on a system on a chip (SOC).

In some embodiments, the baseband circuitry 1204 may provide for communication compatible with one or more radio technologies. For example, in some embodiments, the baseband circuitry 1204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1204 is configured to support radio communications of more than one wireless protocol may be referred to as multi-mode baseband circuitry.

RF circuitry 1206 may enable communication with wireless networks using modulated electromagnetic radiation through a non-solid medium. In various embodiments, the RF circuitry 1206 may include switches, filters, amplifiers, etc. to facilitate the communication with the wireless network. RF circuitry 1206 may include a receive signal path which may include circuitry to down-convert RF signals received from the FEM circuitry 1208 and provide baseband signals to the baseband circuitry 1204. RF circuitry 1206 may also include a transmit signal path which may include circuitry to up-convert baseband signals provided by the baseband circuitry 1204 and provide RF output signals to the FEM circuitry 1208 for transmission.

In some embodiments, the RF circuitry 1206 may include a receive signal path and a transmit signal path. The receive signal path of the RF circuitry 1206 may include mixer circuitry 1206A, amplifier circuitry 1206B and filter circuitry 1206C. The transmit signal path of the RF circuitry 1206 may include filter circuitry 1206C and mixer circuitry 1206A. RF circuitry 1206 may also include synthesizer circuitry 1206D for synthesizing a frequency for use by the mixer circuitry 1206A of the receive signal path and the transmit signal path. In some embodiments, the mixer circuitry 1206A of the receive signal path may be configured to down-convert RF signals received from the FEM circuitry 1208 based on the synthesized frequency provided by synthesizer circuitry 1206D. The amplifier circuitry 1206B may be configured to amplify the down-converted signals and the filter circuitry 1206C may be a low-pass filter (LPF) or band-pass filter (BPF) configured to remove unwanted signals from the down-converted signals to generate output baseband signals. Output baseband signals may be provided to the baseband circuitry 1204 for further processing. In some embodiments, the output baseband signals may be zero-frequency baseband signals, although this is not a requirement. In some embodiments, mixer circuitry 1206A of the receive signal path may comprise passive mixers, although the scope of the embodiments is not limited in this respect.

In some embodiments, the mixer circuitry 1206A of the transmit signal path may be configured to up-convert input baseband signals based on the synthesized frequency provided by the synthesizer circuitry 1206D to generate RF output signals for the FEM circuitry 1208. The baseband signals may be provided by the baseband circuitry 1204 and may be filtered by filter circuitry 1206C. The filter circuitry 1206C may include a low-pass filter (LPF), although the scope of the embodiments is not limited in this respect.

In some embodiments, the mixer circuitry 1206A of the receive signal path and the mixer circuitry 1206A of the transmit signal path may include two or more mixers and may be arranged for quadrature down-conversion and/or up-conversion respectively. In some embodiments, the mixer circuitry 1206A of the receive signal path and the mixer circuitry 1206A of the transmit signal path may include two or more mixers and may be arranged for image rejection (e.g., Hartley image rejection). In some embodiments, the mixer circuitry 1206A of the receive signal path and the mixer circuitry 1206A may be arranged for direct down-conversion and/or direct up-conversion, respectively. In some embodiments, the mixer circuitry 1206A of the receive signal path and the mixer circuitry 1206A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1206 may include analog-to-digital converter (ADC) and digital-to-analog converter (DAC) circuitry and the baseband circuitry 1204 may include a digital baseband interface to communicate with the RF circuitry 1206.

In some dual-mode embodiments, a separate radio IC circuitry may be provided for processing signals for each spectrum, although the scope of the embodiments is not limited in this respect.

In some embodiments, the synthesizer circuitry 1206D may be a fractional-N synthesizer or a fractional N/N+1 synthesizer, although the scope of the embodiments is not limited in this respect as other types of frequency synthesizers may be suitable. For example, synthesizer circuitry 1206D may be a delta-sigma synthesizer, a frequency multiplier, or a synthesizer comprising a phase-locked loop with a frequency divider.

The synthesizer circuitry 1206D may be configured to synthesize an output frequency for use by the mixer circuitry 1206A of the RF circuitry 1206 based on a frequency input and a divider control input. In some embodiments, the synthesizer circuitry 1206D may be a fractional N/N+1 synthesizer.

In some embodiments, frequency input may be provided by a voltage controlled oscillator (VCO), although that is not a requirement. Divider control input may be provided by either the baseband circuitry 1204 or the applications processor 1202 depending on the desired output frequency. In some embodiments, a divider control input (e.g., N) may be determined from a look-up table based on a channel indicated by the applications processor 1202.

Synthesizer circuitry 1206D of the RF circuitry 1206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1206 may include an IQ/polar converter.

FEM circuitry 1208 may include a receive signal path which may include circuitry configured to operate on RF signals received from one or more antennas 1210, amplify the received signals and provide the amplified versions of the received signals to the RF circuitry 1206 for further processing. FEM circuitry 1208 may also include a transmit signal path which may include circuitry configured to amplify signals for transmission provided by the RF circuitry 1206 for transmission by one or more of the one or more antennas 1210.

In some embodiments, the FEM circuitry 1208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1206). The transmit signal path of the FEM circuitry 1208 may include a power amplifier (PA) to amplify input RF signals (e.g., provided by RF circuitry 1206), and one or more filters to generate RF signals for subsequent transmission (e.g., by one or more of the one or more antennas 1210.

In some embodiments, the UE 1200 comprises a plurality of power saving mechanisms. If the UE 1200 is in an RRC_Connected state, where it is still connected to the eNB as it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the UE 1200 may transition off to an RRC_Idle state, where it disconnects from the network and does not perform operations such as channel quality feedback, handover, etc. The UE 1200 goes into a very low power state and it performs paging where again it periodically wakes up to listen to the network and then powers down again. Since the device might not receive data in this state, in order to receive data, it should transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

In addition, in various embodiments, an eNB device may include components substantially similar to one or more of the example components of UE device 1200 described herein.

It is pointed out that elements of any of the Figures herein having the same reference numbers and/or names as elements of any other Figure herein may, in various embodiments, operate or function in a manner similar those elements of the other Figure (without being limited to operating or functioning in such a manner).

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of " an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. For example, other memory architectures e.g., Dynamic RAM (DRAM) may use the embodiments discussed. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

## Claims

1. An apparatus of an Evolved Node-B (710), eNB, operable to communicate with a User Equipment (730), UE, on a wireless network, comprising:
a memory configured to:
store a Narrow-Band Internet-of-Things, NB-IoT, access barring enable indicator and a System Information Block, SIB, Access Control, SIB-AC, scheduling indicator; and
one or more processors configured to:
generate a Master Information Block Narrow-Band, MIB-NB, message carrying the NB-IoT access barring enable indicator; and
format a SIB1, SIB-1, message to carry the SIB-AC scheduling indicator when the NB-IoT access barring enable indicator has a predetermined value.

2. The apparatus of claim 1, wherein the one or more processors are configured to:
generate a SIB-AC message carrying a set of SIB-AC information at a time indicated by the SIB-AC scheduling indicator.

3. The apparatus of claim 2, wherein the one or more processors are configured to:
format the MIB-NB message to carry a System Information, SI, Value Tag, wherein the SI Value Tag indicates a change in the set of SIB-AC information.

4. An Evolved Node-B, eNB, device (710) comprising an application processor, a memory, one or more antenna ports, and an interface for allowing the application processor to communicate with another device, the eNB device including the apparatus of any of claims 1 through 3.

5. A method performed by an apparatus of an Evolved Node-B (710) comprising:
storing (1010) a Narrow-Band Internet-of-Things, NB-IoT, access barring enable indicator and a System Information Block, SIB, Access Control, SIB-AC, scheduling indicator;
generating (1015) a Master Information Block Narrow-Band, MIB-NB, message carrying the NB-IoT access barring enable indicator; and
formatting (1020) a SIB 1, SIB-1, message to carry the SIB-AC scheduling indicator when the NB-IoT access barring enable indicator has a predetermined value.

6. The method of claim 5, comprising:
generating (1030) a SIB-AC message carrying a set of SIB-AC information at a time indicated by the SIB-AC scheduling indicator.

7. The method of claim 6, comprising:
formatting (1050) the MIB-NB message to carry a System Information,, SI, Value Tag, wherein the SI Value Tag indicates a change in the set of SIB-AC information.

8. Machine readable storage media having machine executable instructions stored thereon that, when executed by one or more processors of an apparatus of an Evolved Node-B, cause the one or more processors to perform a method according to any of claims 5 through 7.

9. An apparatus of a User Equipment (730), UE, operable to communicate with an Evolved Node-B (710), eNB, on a wireless network, comprising:
a memory configured to:
store a Narrow-Band Internet-of-Things, NB-IoT, access barring enable indicator and a System Information Block, SIB, Access Control, SIB-AC, scheduling indicator; and
one or more processors configured to:
process a Master Information Block Narrow-Band, MIB-NB, message carrying the NB-IoT access barring enable indicator; and
decode from a SIB 1, SIB-1, message the SIB-AC scheduling indicator when the NB-IoT access barring enable indicator has a predetermined value.

10. The apparatus of claim 9, wherein the one or more processors are configured to:
process a SIB-AC message carrying a set of SIB-AC information at a time indicated by the SIB-AC scheduling indicator.

11. The apparatus of claim 10, wherein the one or more processors are configured to:
decode from the MIB-NB message a System Information, SI, Value Tag, wherein the SI Value Tag indicates a change in the set of SIB-AC information.

12. A User Equipment, UE, device (730) comprising an application processor, a memory, one or more antennas, a wireless interface for allowing the application processor to communicate with another device, and a touch-screen display, the UE device including the apparatus of any of claims 9 through 11.

13. A method performed by an apparatus of a User Equipment, UE, comprising:
storing (1110) a Narrow-Band Internet-of-Things, NB-IoT, access barring enable indicator and a System Information Block, SIB, Access Control, SIB-AC, scheduling indicator; and
processing (1115) a Master Information Block Narrow-Band, MIB-NB, message carrying the NB-IoT access barring enable indicator; and
decoding (1120) from a SIB 1, SIB-1, message the SIB-AC scheduling indicator when the NB-IoT access barring enable indicator has a predetermined value.

14. The method of claim 13, comprising:
processing a SIB-AC message carrying a set of SIB-AC information at a time indicated by the SIB-AC scheduling indicator.

15. Machine readable storage media having machine executable instructions stored thereon that, when executed by one or more processors of an apparatus of a User Equipment, cause the one or more processors to perform a method according to either of claims 13 or 14.

## Patentansprüche

1. Gerät eines Evolved Node-B (710), eNB, der mit einer Benutzerausrüstung (730), UE, in einem drahtlosen Netzwerk kommunizieren kann, umfassend:
einen Speicher, der konfiguriert ist, um:
einen Schmalband-Internet-of-Things, NB-IoT, Zugangssperrenfreigabeanzeiger und einen Systeminformationsblock-, SIB, Zugangskontrollen-, SIB-AC, Planungsanzeiger zu speichern;
und
einen oder mehrere Prozessoren, die zu Folgendem ausgelegt sind:
Erzeugen einer Master-Informations-Schmalband-, MIB-NB, Nachricht, die den NB-IoT-Zugangssperrenfreigabeanzeiger trägt; und
Formatieren einer SIB 1, SIB-1, Nachricht, um den SIB-AC-Planungsanzeiger zu tragen, wenn der NB-IoT-Zugangssperrenfreigabeanzeiger einen vorgegebenen Wert aufweist.

2. Gerät nach Anspruch 1, wobei der eine oder die mehreren Prozessoren konfiguriert sind, um:
eine SIB-AC-Nachricht, die einen Satz von SIB-AC-Informationen zu einer durch den SIB-AC-Planungsanzeiger angezeigten Zeit trägt, zu erzeugen.

3. Gerät nach Anspruch 2, wobei der eine oder die mehreren Prozessoren konfiguriert sind, um:
die MIB-NB-Nachricht zu formatieren, dass sie ein Systeminformations-, SI-, Wert-Tag trägt, wobei das SI-Wert-Tag eine Änderung in dem Satz von SIB-AC-Informationen anzeigt.

4. Evolved Node-B-, eNB, Vorrichtung (710), umfassend einen Anwendungsprozessor, einen Speicher, einen oder mehrere Antennenanschlüsse und eine Schnittstelle, die es dem Anwendungsprozessor ermöglicht, mit einer anderen Vorrichtung zu kommunizieren, wobei die eNB-Vorrichtung das Gerät nach einem der Ansprüche 1 bis 3 einschließt.

5. Verfahren, das von einem Gerät eines Evolved Node-B (710) durchgeführt wird, umfassend:
Speichern (1010) eines Schmalband-Internet-of-Things, NB-IoT, Zugangskontrollenanzeigers und eines Systeminformationsblock-, SIB, Zugangskontrollen-, SIB-AC, Planungsanzeigers;
Erzeugen (1015) einer Master-Informations-Schmalband-, MIB-NB, Nachricht, die den NB-IoT-Zugangssperrenfreigabeanzeiger trägt; und
Formatieren (1020) einer SIB 1, SIB -1, Nachricht, um den SIB-AC-Planungsanzeiger zu tragen, wenn der NB-IoT-Zugangssperrenfreigabeanzeiger einen vorgegebenen Wert aufweist.

6. Verfahren nach Anspruch 5, umfassend:
Erzeugen (1030) einer SIB-AC-Nachricht, die einen Satz von SIB-AC-Informationen zu einer durch den SIB-AC-Planungsanzeiger angezeigten Zeit trägt.

7. Verfahren nach Anspruch 6, umfassend:
Formatieren (1050) der MIB-NB-Nachricht, um ein Systeminformations-, SI-, Wert-Tag zu tragen, wobei das SI-Wert-Tag eine Änderung in dem Satz von SIB-AC-Informationen anzeigt.

8. Maschinenlesbare Speichermedien mit darauf gespeicherten maschinenausführbaren Befehlen, die, wenn sie von einem oder mehreren Prozessoren eines Geräts eines Evolved Node-B ausgeführt werden, bewirken, dass der eine oder die mehreren Prozessoren ein Verfahren nach einem der Ansprüche 5 bis 7 ausführen.

9. Gerät einer Benutzerausrüstung (730), UE, die mit einem Evolved Node-B (710), eNB, in einem drahtlosen Netzwerk kommunizieren kann, umfassend:
einen Speicher, der konfiguriert ist, um:
einen Schmalband-Internet-of-Things, NB-IoT, Zugangssperrenfreigabeanzeiger und einen Systeminformationsblock-, SIB, Zugangskontrollen-, SIB-AC, Planungsanzeiger zu speichern;
und
einen oder mehrere Prozessoren, die zu Folgendem ausgelegt sind:
eine Master-Informations-Schmalband-, MIB-NB, Nachricht, die den NB-IoT-Zugangssperrenfreigabeanzeiger trägt, zu bearbeiten; und
von einer SIB 1, SIB -1, Nachricht den SIB-AC-Planungsanzeiger zu dekodieren, wenn der NB-IoT-Zugangssperrenfreigabeanzeiger einen vorgegebenen Wert aufweist.

10. Gerät nach Anspruch 9, wobei der eine oder die mehreren Prozessoren konfiguriert sind, um:
eine SIB-AC-Nachricht, die einen Satz von SIB-AC-Informationen zu einer durch den SIB-AC-Planungsanzeiger angezeigten Zeit trägt, zu bearbeiten.

11. Gerät nach Anspruch 10, wobei der eine oder die mehreren Prozessoren konfiguriert sind, um:
von der MIB-NB-Nachricht einen Systeminformations-, SI, Wert-Tag zu dekodieren, wobei der SI-Wert-Tag eine Änderung in dem Satz von SIB-AC-Informationen anzeigt.

12. Benutzerausrüstungs-, UE, Vorrichtung (730), umfassend einen Anwendungsprozessor, einen Speicher, eine oder mehrere Antennen, eine drahtlose Schnittstelle, die es dem Anwendungsprozessor ermöglicht, mit einer anderen Vorrichtung zu kommunizieren, und eine Touchscreen-Anzeige, wobei die UE-Vorrichtung das Gerät nach einem der Ansprüche 9 bis 11 einschließt.

13. Verfahren, das von einem Gerät einer Benutzerausrüstung, UE, durchgeführt wird, umfassend:
Speichern (1110) eines Schmalband-Internet-of-Things, NB-IoT, Zugangssperrenfreigabeanzeigers
eines Systeminformationsblock-, SIB, Zugangskontrollen-, SIB-AC, Planungsanzeigers; und
Bearbeiten (1115) einer Master-Informations-Schmalband-, MIB-NB, Nachricht, die den NB-IoT-Zugangssperrenfreigabeanzeiger trägt; und
Dekodieren (1120) von einer SIB 1)-Nachricht des SIB-AC-Planungsanzeigers, wenn der NB-IoT-Zugangssperrenfreigabeanzeiger einen vorgegebenen Wert aufweist.

14. Verfahren nach Anspruch 13, umfassend:
Bearbeiten einer SIB-AC-Nachricht, die einen Satz von SIB-AC-Informationen zu einer durch den SIB-AC-Planungsanzeiger angezeigten Zeit trägt.

15. Maschinenlesbare Speichermedien mit darauf gespeicherten maschinenausführbaren Befehlen, die, wenn sie von einem oder mehreren Prozessoren eines Geräts einer Benutzerausrüstung ausgeführt werden, bewirken, dass der eine oder die mehreren Prozessoren ein Verfahren nach einem der Ansprüche 13 oder 14 ausführen.

## Revendications

1. Appareil d'un nœud B évolué (710), eNB, utilisable pour communiquer avec un équipement utilisateur (730), UE, sur un réseau sans fil, comprenant :
une mémoire configurée pour :
stocker un indicateur de validation d'interdiction d'accès à l'Internet des objets à bande étroite, NB-loT, et
un indicateur de planification de contrôle d'accès, SIB-AC, au bloc d'information système, SIB ;
et
un ou plusieurs processeurs configurés pour :
générer un message de bande étroite de bloc d'information maître, MIB-NB, transportant l'indicateur de validation d'interdiction d'accès NB-loT ; et
formater un message de SIB 1, SIB-1 pour transporter l'indicateur de planification SIB-AC lorsque l'indicateur de validation d'interdiction d'accès NB-loT présente une valeur prédéterminée.

2. Appareil selon la revendication 1, dans lequel le ou les processeurs sont configurés pour :
générer un message de SIB-AC transportant un ensemble d'informations de SIB-AC à un instant indiqué par l'indicateur de planification de SIB-AC.

3. Appareil selon la revendication 2, dans lequel le ou les processeurs sont configurés pour :
formater le message de MIB-NB pour transporter une étiquette de valeur d'information système, SI, dans lequel l'étiquette de valeur de SI indique un changement dans l'ensemble d'informations de SIB-AC.

4. Dispositif à nœud B évolué, eNB, (710) comprenant un processeur d'application, une mémoire, un ou plusieurs ports d'antenne, et une interface pour permettre au processeur d'application de communiquer avec un autre dispositif, le dispositif eNB comprenant l'appareil selon l'une quelconque des revendications 1 à 3.

5. Procédé mis en œuvre par un appareil d'un nœud B évolué (710) comprenant :
le stockage (1010) d'un indicateur de validation d'interdiction d'accès à l'Internet des objets à bande étroite, NB-loT, et d'un indicateur de planification de contrôle d'accès, SIB-AC, à un bloc d'information système, SIB ;
la génération (1015) d'un message de bande étroite de bloc d'information maître, MIB-NB, transportant l'indicateur de validation d'interdiction d'accès NB-loT; et
le formatage (1020) d'un message de SIB 1, SIB-1, pour transporter l'indicateur de planification SIB-AC lorsque l'indicateur de validation d'interdiction d'accès NB-loT a une valeur prédéterminée.

6. Procédé selon la revendication 5, comprenant :
La génération (1030) d'un message de SIB-AC transportant un ensemble d'informations de SIB-AC à un instant indiqué par l'indicateur de planification de SIB-AC.

7. Procédé selon la revendication 6, comprenant :
le formatage (1050) du message de MIB-NB pour transporter une étiquette de valeur d'information système, SI, dans lequel l'étiquette de valeur SI indique un changement dans l'ensemble d'informations de SIB-AC.

8. Support de stockage lisible par machine sur lequel sont stockées des instructions exécutables par machine qui, lorsqu'elles sont exécutées par un ou plusieurs processeurs d'un appareil d'un nœud B évolué, amènent le ou les processeurs à réaliser un procédé selon l'une quelconque des revendications 5 à 7.

9. Appareil d'un équipement utilisateur (730), UE, utilisable pour communiquer avec un nœud B évolué (710), eNB, sur un réseau sans fil, comprenant :
une mémoire configurée pour :
stocker un indicateur de validation d'interdiction d'accès à l'Internet des objets à bande étroite, NB-loT, et
un indicateur de planification de contrôle d'accès, SIB-AC, au bloc d'information système, SIB ;
et
un ou plusieurs processeurs configurés pour :
traiter un message de bande étroite de bloc d'information maître, MIB-NB, transportant l'indicateur de validation d'interdiction d'accès NB-loT ; et
décoder à partir d'un message de SIB 1, SIB-1, l'indicateur de planification de SIB-AC lorsque l'indicateur de validation d'interdiction d'accès NB-loT présente une valeur prédéterminée.

10. Appareil selon la revendication 9, dans lequel le ou les processeurs sont configurés pour :
traiter un message de SIB-AC transportant un ensemble d'informations de SIB-AC à un instant indiqué par l'indicateur de planification de SIB-AC.

11. Appareil selon la revendication 10, dans lequel le ou les processeurs sont configurés pour :
décoder à partir du message de MIB-NB une étiquette de valeur d'information système, SI ;
dans lequel l'étiquette de valeur SI indique un changement dans l'ensemble d'informations de SIB-AC.

12. Dispositif d'équipement utilisateur, UE, (730) comprenant un processeur d'application, une mémoire, une ou plusieurs antennes, une interface sans fil pour permettre au processeur d'application de communiquer avec un autre dispositif, et un affichage à écran tactile, le dispositif UE comprenant l'appareil selon l'une quelconque des revendications 9 à 11.

13. Procédé mis en œuvre par un appareil d'un équipement utilisateur, UE, comprenant :
stocker (1110) un indicateur de validation d'interdiction d'accès à l'Internet des objets à bande étroite, NB-IoT;
et un indicateur de planification du contrôle d'accès, SIB-AC, au bloc d'information système, SIB ; et
traiter (1115) un message de bande étroite de bloc d'information maître, MIB-NB, transportant l'indicateur de validation d'interdiction d'accès NB-loT ; et
décoder (1120) à partir d'un message de SIB 1, SIB-1, l'indicateur de planification de SIB-AC lorsque l'indicateur de validation d'interdiction d'accès NB-loT a une valeur prédéterminée.

14. Procédé selon la revendication 13, comprenant :
traiter un message de SIB-AC transportant un ensemble d'informations de SIB-AC à un instant indiqué par l'indicateur de planification de SIB-AC.

15. Support de stockage lisible par machine sur lequel sont stockées des instructions exécutables par machine qui, lorsqu'elles sont exécutées par un ou plusieurs processeurs d'un appareil d'un équipement utilisateur, amènent le ou les processeurs à réaliser un procédé selon l'une quelconque des revendications 13 ou 14.
